# EUROPEAN PATENT SPECIFICATION

(11) **EP 1 415 740 B1**
(45) Date of publication and mention of the grant of the patent: **26.08.2009**
(21) Application number: 03090064.1
(22) Date of filing: 14.03.2003
(51) Int. Cl.: B22D 17/00, B29C 45/46, B29C 45/53, B29C 45/63, B29C 45/72

(54) **Device for melting and casting materials**
Vorrichtung zum Schmelzen und Giessen von Materialien
Dispositif pour fusion et coulage des materiaux

(30) Priority: 31.10.2002 JP 2002318613
(43) Date of publication of application: 06.05.2004
(73) Proprietor: Limtech Corporation, Aichi-gun, Aichi-ken (JP)
(72) Inventor: Yamada, Fujio, Chiryu-shi, Aichi-ken (JP)
(74) Representative: Gross, Felix

(56) References cited:
- EP-A- 0 662 361
- EP-A- 0 718 059
- WO-A-00/05015
- PATENT ABSTRACTS OF JAPAN vol. 1997, no. 05, 30 May 1997 (1997-05-30) & JP 09 010908 A (JAPAN STEEL WORKS LTD:THE), 14 January 1997 (1997-01-14)

## Description

The present invention relates to molten material supply units, and may be, for example, advantageously utilized to melt materials, such as metals and/or mixtures of metal and plastic, that have relatively high melting points. The present invention also relates to molding apparatus (e.g. molding dies) that include such molten material supply units.

Die-cast molds (machines) are typically used in order to mold metals into articles of manufacture. Molten metals, such as molten aluminum alloys and magnesium alloys, are usually melted in a blast furnace and then transferred to the die while being exposed to air. Thereafter, the molten metals are injected under pressure into the die. Generally speaking, die-cast molds utilize a piston-cylinder mechanism to pressurize the molten metals, so that the molten metals can be injected into the die under pressure. The injected molten metal is then cooled and solidified within the die, thereby forming a metal molded product.

However, a blast furnace is usually expensive and requires a costly installation. Further, heated gases generated when the metal is melted within the blast furnace and exposed to air may create environmental pollution. Therefore, there is a long-felt need for apparatus and methods that can inexpensively melt materials, including but not limited to metals and metal-plastic mixtures, and preferably minimize environmental pollution.

JP 09010908 A describes a molten metal supply unit into which, besides a metal, inert gas is supplied at an inlet of the molten supply unit and is drawn off by a vacuum pump at an outlet of the molten supply unit in order to produce metallic molten products having little blow holes and good quality.

WO 00/05015 A1 describes a die casting system including a vessel which defines a reservoir of a semi-solid metal and a transfer system through which the metal is transferred by a vacuum towards a mold cavity in a die casting machine. Semi-solid metal taken away from the reservoir is replaced by liquid metal so that a stable homogeneous isothermal bath of semi-solid metal is maintained.

EP 0 662 361 A1 describes a die casting method and a die casting machine, wherein the material to be cast is heated in a casting sleeve by electromagnetic induction. Due to the electromagnetic force generated between a conductor and the material to be cast, the material is substantially separated from the wall surface of the casting sleeve. Thereby, an otherwise occurring temperature drop can be circumvented.

EP 0 718 059 A1 describes an angular formed oxide stripper to be incorporated into a pressure casting machine. This oxide stripper is intended to be used to strip oxide layers of thixotrope molding bolts made of metal.

It is, accordingly, an object of the present invention to teach improved molten material supply units and molding apparatus having such supply units as claimed in the main claims 1 and 8. Further specifications are claimed in independent claims 2-7, 9-17 resp.

In one aspect of the present teachings, the molten material supply units may be utilized to melt solid or semi-solid materials without using a blast furnace and may preferably reduce (or substantially eliminate) pollutant gases that are discharged into the surrounding environment. Herein, the terms "semi-solid," "semi-melted" and "softened" are intended to mean a state in which the material (e.g. a metal, a metal-plastic mixture or a non-metal organic composition) simultaneously exists in both solid and liquid phases, or a state in which dendrite (solid particles) is dispersed or suspended within a liquid material. Thus, a semi-solid material may be substantially solid, but may be moldable or flexible. In one aspect of the present teachings, the material may not be normally moldable or flexible in its purely solid state, but becomes moldable or flexible in the semi-solid state. Thus, in this aspect of the present teachings, any material that can transition to or assume a softened state may be advantageously melted and processed according to the present teachings.

According to another aspect of the present teachings, molten material supply units are taught that can reduce pollutant gases that are typically generated when the material is melted in the presence of air. Thus, molten material supply units include a vacuum heating device. For example, a heating structure may communicate with a vacuum device, such as a vacuum pump. In this aspect of the present teachings, the heating structure may have any appropriate design or configuration, as long as the heating structure is substantially airtight, other than an inlet and an outlet of the heating structure. For example, melting chambers, heating structures and heating cylinders are described further below in representative embodiments of the present teachings. One appropriate class of heaters may, e.g., generate heat by supplying an electric current through an electrically resistive material. However, other types of heaters are naturally contemplated, including heaters that generate heat by combusting a fuel source. Thus, in this aspect of the present teachings, the materials preferably can melt within the heating structure from a solid state or a semi-solid state into a molten state (e.g., a purely liquid state) substantially in the absence of air.

In another aspect of the present teachings, the materials may be supplied into the heating structure one after another (e.g. sequentially) in forms of rods or another convenient configuration, which configuration is not particularly limited in this aspect of the present teachings. In one embodiment of the present teachings, the outer dimension of the material (e.g., a cylinder-shaped rod) preferably substantially corresponds to an inner dimension of the inlet to the heating structure. More preferably, the inner dimension of the inlet is slightly smaller than the outer dimension of the softened material. Thus, in this aspect, the material is preferably in a softened or semi-solid state when it is inserted through an inlet of the heating structure. For example, in another embodiment, the softened material may be forcibly introduced through the inlet of the heating structure. In such case, an airtight seal preferably will be formed at the inlet between the inner wall of the heating structure and the softened material.

In another aspect of the present teachings, the materials may be supplied in the form of a softened cylindrical rod and the inlet is a device that squeezes the material as the softened metal rod is forced through the inlet, thereby ensuring an air tight seal. The squeezing device may be a ring or any other appropriate structure than has an inner perimeter or diameter slightly less than the perimeter or diameter of the rods. The squeezing device is disposed substantially at or around the inlet of the heating structure. In this embodiment of the present teachings, substantially no air preferably contacts the molten materials within the heating cylinder.

In another aspect of the present teachings, a device may be provided to preheat the material that will be melted (e.g., in the shape of cylinder-shaped rods) before the material is fed into a melting chamber, which may be, e.g., a vacuum heating device. Preferably, the preheating device brings the solid material to a softened or semi-solid state: Thus, the melting process within the melting chamber can be easily and rapidly performed, In addition, the preheated (softened) material may be easily squeezed when being forcibly inserted into the melting chamber.

In another aspect of the present teachings, molding apparatus are taught that can mold the materials while generally reducing or preventing the generation of pollutant gases. The molding apparatus includes a molten material supply unit that may serve as a pressurizing and charging unit. Thus, the molten material supply unit may be used to directly or indirectly charge the molten materials into a die under pressure. Similar to the molten material supply unit, the pressurizing and charging unit may serve to charge the molten materials into the die in a substantially vacuum condition.

In another aspect of the present teachings, the heating structure is configured to prevent any accumulation of gases within the heating structure. Thus, the heating structure is coupled to a vacuum device, so that gases, e.g., pollutant gases generated when the material is melted, may be drawn into the vacuum pump. In another embodiment of the present teachings, the heating structure may be configured as a cylinder or a tube that defines a flow path of the semi-solid or softened material. A front portion of the heating structure defines an outlet channel that communicates with the flow path and opens at an outlet opening. The outlet channel may be tapered toward the outlet opening. In addition, the outlet channel may extend horizontally or upward toward the outlet opening. Therefore, the gases that could not be drawn by the vacuum device may be reliably and smoothly discharged from the outlet opening without accumulation within the flow path of the heating structure.

Other objects, features and advantage of the present invention will be readily understood after reading the following detailed description together with the accompanying drawings and the claims.
FIG. 1 shows a vertical cross-sectional view of a representative metal molding apparatus;
FIG. 2 is an explanatory cross-sectional view showing a representative operation of a pushing cylinder of a representative preheating unit, in which one metal rod drops into two open cylinder halves of the pushing cylinder;
FIG. 3 is an enlarged vertical sectional view of a front portion of a representative heating cylinder and a hot nozzle attached thereto and showing the configurations of a flow path defined in the heating cylinder and a flow channel defined in the hot nozzle; and
FIG. 4 is an enlarged vertical sectional view similar to FIG. 3, but showing an alternative embodiment of a heating cylinder.

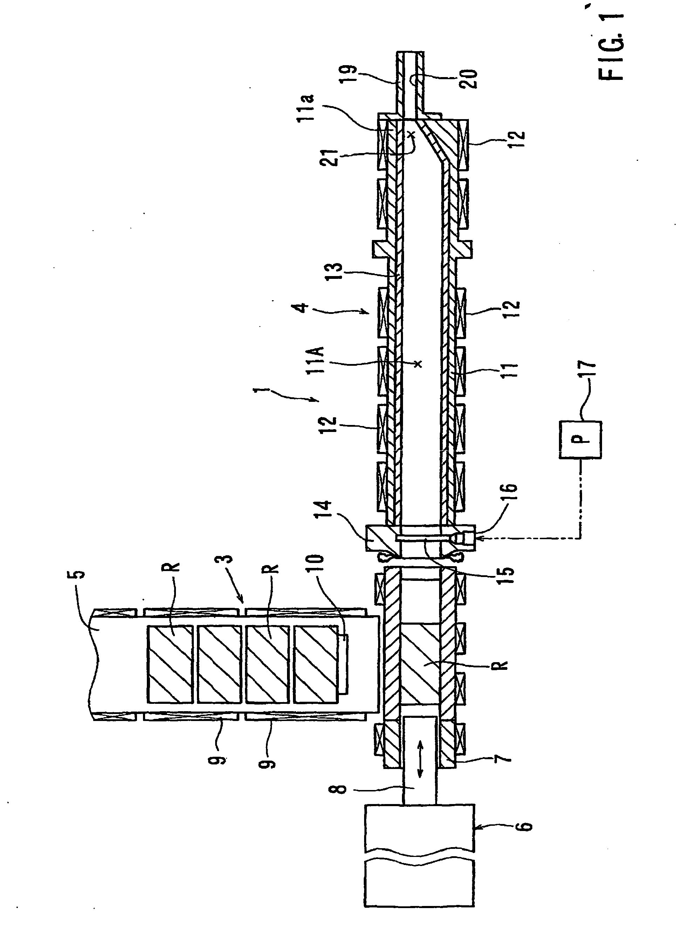

A representative metal molding apparatus is generally shown in FIG. 1. The first representative metal molding apparatus may include, for example, a molten metal supply unit 1, as shown in FIG. 1.

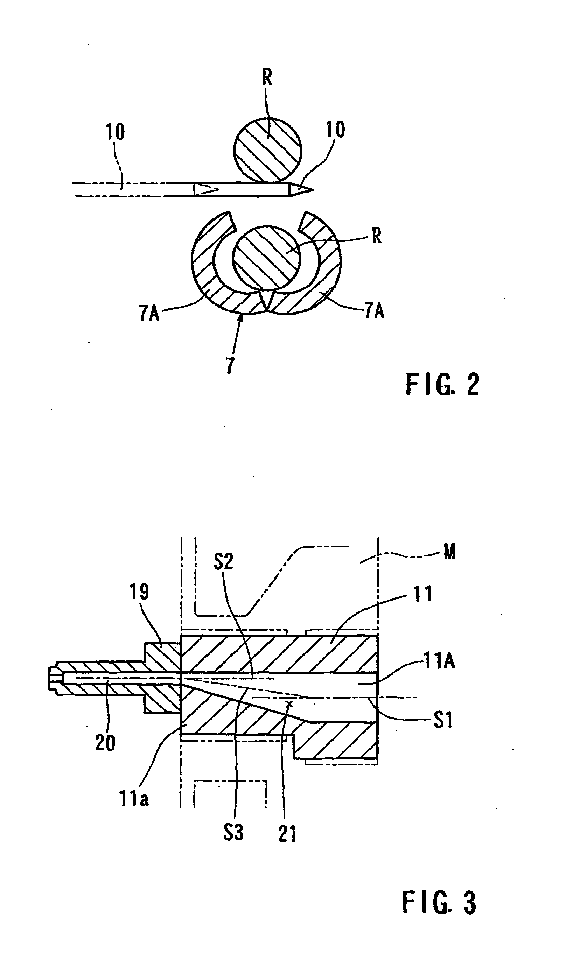

Referring to FIG. 1, the molten metal supply unit 1 may include a preheating section 3 and a vacuum heating section 4. The molten metal supply unit 1 may serve as a pressurizing and charging unit for charging a molten metal into a die M, a part of which is shown in FIG. 3. Preferably, the preheating section 3 may include a material stacker 5 and a hydraulic cylinder device 6. A space may be defined within the material stacker 5 to receive cylindrical metal rods R in a vertically stacked row. For example, the metal rods R may be cut from a single long rod to have a predetermined (e.g., constant or uniform) length. Preferably, the length of the metal rods R is determined such that the volume of each metal rod R is substantially equal to the volume of a cavity (not shown) of the die M, as will be further explained below. The hydraulic cylinder device 6 may be utilized to push the metal rods R into the vacuum heating section 4 one after another.

The hydraulic cylinder device 6 may include a supply cylinder 7 that serves to receive the cylindrical metal rods R that may be gravity fed one by one from the stacker 5 into the supply cylinder 7. The hydraulic cylinder device 6 also may include a pushing piston 8 that serves to push the metal rods R into the vacuum heating section 4.

One or more heaters 9 may be mounted on the outside of the stacker 5 and may serve to preheat the metal rods R to an appropriate temperature, which may be e.g., a temperature that will bring the metal rod R into a softened state. For example, the metal rods R may be heated to a softened state before the metal rods R are supplied to the vacuum heating section 4. Although not shown in the drawings, an upper inlet opening may be defined within the stacker 5 and the metal rods R may be inserted through the upper inlet opening in order to be received within the stacker 5. The capacity of the stacker 5 or the number of metal rods R that can be received within the stacker 5 is not particularly limited and may be suitably determined, e.g., with consideration to the capacity of the cavity of the die M. Preferably, a stop 10 may be disposed at the bottom of the stacker 5. An actuator (not shown) may be utilized to horizontally move (i.e. substantially perpendicular to the longitudinal axis of stacker 5) the stop 10, thereby extending the stop 10 into the stacker 5 and withdrawing the stop 10 from the stacker 5. Thus, the stop 10 can be utilized to selectively load or insert the metal rods R into the supply cylinder 7.

A cross-sectional view of a representative, but not limiting, supply cylinder 7 is shown in FIG. 2. This supply cylinder 7 may be positioned directly below the stacker 5 and may include, e.g., a pair of cylinder halves 7A. A hinge (not shown) may pivotably attach the bottom edges of the cylinder halves 7A and the actuator (not shown) may open and close the cylinder halves. Thus, the cylinder halves 7A may open to receive the metal rods R when the metal rods R are inserted or dropped by withdrawing the stop 10 from the stacker 5. The cylinder halves 7A may then close to allow the pushing piston 8 to push the metal rod R towards the vacuum heating section 4. Preferably, the actuator of the cylinder halves 7A and the actuator of the stop 10 may function together with the hydraulic cylinder device 6, so that the metal rods R are sequentially placed into the supply cylinder 7 and then pushed by the pushing piston 8.

The vacuum heating section 4 may include a heating cylinder 11 that serves to receive the preheated metal rods R from the supply cylinder 7. In addition, the heating cylinder 11 preferably furthers heats the metal rods R. As a result, the metal rods R may be heated to a higher temperature, thereby completely melting the softened metal rods R into molten metal. Thereafter, the molten metal is supplied to the die for molding. In order to further heat the metal rods R, heaters 12 may be attached to the outer side of the heating cylinder 11.

In another preferable, but optional, embodiment, a protective tube 13 may be inserted into the heating cylinder 11, so that the heating cylinder 11 does not directly contact the molten materials. Preferably, the protective tube 13 may comprise one or more materials that are heat-resistant and that do not chemically react with the molten materials, while providing suitable mechanical strength and a small coefficient of thermal expansion. In one preferable, but not limiting example, ceramics and ceramic-metal composites may be utilized in the protective tube 13.

Although external heaters 12 are illustrated in the first representative embodiment, the particular type of heater that may be used as heaters 12 is not particular limited. For example, internal heaters may be embedded within the heating cylinder 11. In addition, the length of the heating cylinder 11 may be suitably determined by considering the heating capability of the heaters 12 and the melting point of the material that will be melted.

Still referring to FIG. 1, an inlet ring 14 may be positioned at the rear end of the heating cylinder 11, so that the ring 14 opposes the front end of the supply cylinder 7 of the preheating section 3. Preferably, the ring 14 may have a relatively high melting point and high mechanical strength, so that the ring 14 can squeeze or to scrape the outer surface of the semi-melted metal rods R. For example, ultra-hard alloys may be utilized to form ring 14. Further, the inner diameter of ring 14 is preferably slightly smaller than the outer diameter of the metal rods R. For example, if the rods R have a diameter of 50 mm, the ring 14 may have an inner diameter of about 49.5 to 49.8 nun.

The inner diameter of the ring 14 may be uniform along the axial (longitudinal) direction of the vacuum heating section 4 or may gradually decrease along the axial (longitudinal) direction. In addition, an annular recess 15 may be formed within the inner peripheral surface of the ring 14 and may communicate with a vacuum pump 17 via a communication port 16. Thus, in a preferred aspect of the present teachings, the inner space of the heating cylinder 11 may be brought into a substantially vacuum condition when the metal rods R are completely melted, as will be further explained below.

The inner wall of a front portion 11a of the heating cylinder 11 preferably becomes narrower toward the front end of the front portion 11a. Further, the front portion 11a preferably communicates with a flow channel 20 defined within a hot nozzle 19 that is attached to the front portion 11a of the heating cylinder 11..

A front end of the flow channel 20 of the hot nozzle 19 (right side as shown in FIG. 1) may directly open into the cavity of the die M and the inner diameter may decrease towards the cavity. A variety of known dies M may be utilized with the present teachings and the construction of the die M is not particularly limited. For example, the die M may include a movable die part and a fixed die part (not shown). The cavity may be defined between the movable die part and the fixed die part.

Although not shown in the drawings, an insulation layer may cover the outer surface of the hot nozzle 19 and the inner surface of the flow channel 20 and the insulation layer preferably may be made of one or more ceramic materials. Ceramic is particularly preferable as the material of the inner layer, because this material may also serve to protect the inner wall of the hot nozzle 19 against the molten metals, which was described above in connection with the protective tube 13 of the heating cylinder 11. By using this arrangement, the temperature of the hot nozzle 19, and in particular the temperature at the front end portion, can be reliably and quickly controlled in response to a molding cycle.

The construction of the heating cylinder 11, in particular the construction of the front portion of the heating cylinder 11 will now be described with reference to FIGS. 1 and 3. In FIG.3, the illustration of the heaters 12 and the protective tube 13 is omitted for explanation purpose.

Referring to FIG. 3, a flow path 11A may be defined within the heating cylinder 11. The flow path 11A may have a circular cross section and may have a central axis S1 that extends in the horizontal direction. An outlet channel 21 may be defined within a front portion (left portion as viewed in FIG. 3) of the heating cylinder 11. The left end of the outlet channel 21 may open into the flow channel 20 defined within the hot nozzle 19. The right end of the outlet channel 21 communicates with the flow path 11A. The outlet channel 21 and the flow channel 20 of the hot nozzle 19 also may have circular cross sections. The flow channel 20 may have a central axis S2 that extends in parallel to and above the central axis S1. The outlet channel 21 may have a central axis S3 that is inclined upward relative to the central axis S 1 of the flow path 11A. The outlet channel 21 may be tapered or narrowed toward the flow channel 20 in the direction along the central axis S3. The upper edges of the flow path 11A, the outlet channel 21 and the flow channel 20 may extend in series with each other in the horizontal direction.

Because the upper edge of the outlet channel 21 of the heating cylinder 11 extends in the horizontal direction in line with both the upper edges of the flow path 11A and the flow channel 20, gases that may be generated when the metal is heated may be easily and smoothly discharged from the heating cylinder 11 via the flow channel 20 of the hot nozzle 19. In addition, the flow channel 20 as well as the flow path 11A may be reliably filled with the melted metal without producing any space during the charging operation of the melted metal into the die M. Further, even when the supply of the melted metal to the die M has been stopped and gases have been produced within the flow path 11A, the gases may not be accumulated at the upper potion of the flow path 11 A within the heating cylinder 11 but may be reliably discharged to the outside. Therefore, any possible defections in the molded products due to the gasses may be reliably prevented or minimized.

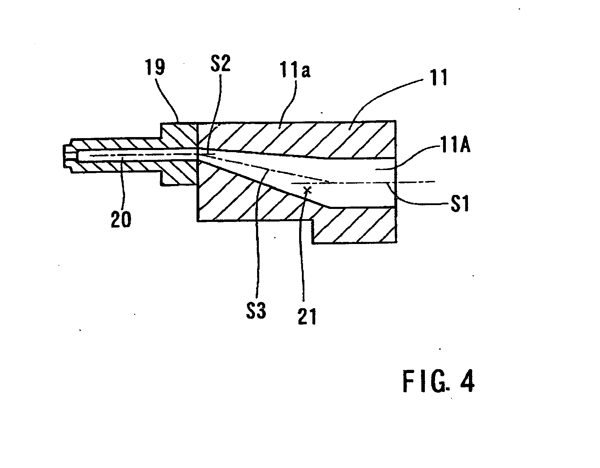

Alternatively, the outlet channel 21 may be configured as shown in FIG. 4. In this alternative embodiment, the outlet channel 21 is defined such that the upper edge of the outlet channel 21 is inclined upward toward the upper edge of the flow channel 20 of the hot nozzle 19. In other words, the upper edge of the outlet channel 21 is positioned below the upper edge of the flow channel 20. Otherwise, the alternative embodiment is the same as the representative embodiment shown in FIG. 3 and also may provide the same advantages as the embodiment of FIG. 3.

A representative molding process will now be described with reference to the above representative embodiment.
(1) First, the metal rods R are sequentially charged into the stacker 5 of the preheating section 3 and the heaters 9 heat the metal rods R to a predetermined temperature, which is preferably about 300°C for ADC12 (aluminum alloy) and MD1D (magnesium alloy). Therefore, the metal rods R are softened within the stacker 5.
(2) The cylinder halves 7A of the cylinder 7 then open as shown in FIG. 3. The stop 10 moves from a support position, which is directly below the stack of the metal rods R as indicated by solid lines in FIG. 2, to a release position, which is shown in dotted lines in FIG. 2. As a result, the lowermost metal rod R will drop or fall into the open cylinder halves 7A due to gravity. As soon as the lowermost metal rod R (hereinafter also called the "first metal rod R") is released from the stacker 5, the stop 10 returns to the support position so as to, prevent the next lowermost metal rod R from dropping into the open cylinder halves 7A. At this time, the cylinder halves 7A preferably close.
(3) The pushing piston 8 of the hydraulic cylinder device 6 moves forward (rightward as shown in FIG. 1) in order to push the first metal rod R though the ring 14, which is positioned on the rear side of the heating cylinder 11, by a predetermined distance. Therefore, the front end of the first metal rod R is positioned rearward (leftward as shown in FIG. 1) of the annular recess 15 of the ring 14 by a small distance. Because the inner diameter of the ring 14 is slightly smaller than the diameter of the metal rods R, the first metal rod R will be squeezed by the edge of the rear opening of the ring 14. As a result, an air-tight seal is formed between the inner surface of the ring 14 and the outer surface of a part of the first metal rod R that has been moved into the ring 14. Thus, no gaps exist between the ring 14 and the first metal rod R, which gaps could permit air to be introduced into the heating cylinder 11. Consequently, the inner space of the heating cylinder 11 will be substantially sealed from the outside environment by forcing the first metal rod R through ring 14, which has a slightly smaller diameter that metal rod R.
(4) When the metal rod R is disposed within the heating cylinder 11, the vacuum pump 17 is preferably driven so as to create a substantially vacuum condition (preferably less than about 10 mm Hg in this representative embodiment) within the heating cylinder 11.
(5) Then, the pushing piston 8 moves further towards the ring 14. The forward movement of the pushing piston 8 may be stopped when the rear end of the first metal rod R reaches a position immediately before the ring 14. Thereafter, the piston 8 may return to the original (resting) position, which is shown in FIG. 1.
(6) The next metal rod R may then be supplied from the stacker 5 into the cylinder 7 in the same manner as described in the above-described Step (2). Thereafter, the next metal rod R may be pushed into the heating cylinder 11 through the ring 14 by means of the pushing piston 8 until the rear end of the metal rod R reaches the position immediately before the ring 14. Therefore, the first metal rod R may be pushed further into the heating cylinder 11 by the next metal rod R. The same operation may be repeatedly performed for the remaining metal rods R in the stacker 5.
   Thus, the metal rods R are supplied into the heating cylinder 11 one after another and may be sequentially brought from a semi-solid state into a completely melted state by the heating operation of the heaters 12. For example, ADC12 (aluminum alloy) and MD1D (magnesium alloy) may be completely melted at about 580 to 600°C.
(7) After the heating cylinder 11 has become filled with molten material, the pushing operation by the pushing piston 8 may be temporarily stopped. At this stage, the rear portion of the last metal rod R is positioned rearwardly adjacent to the front end of the ring 14.
(8) Subsequently, the hydraulic cylinder device 6 may be driven, so that the piston 8 moves forwardly. When the piston 8 reaches the forward stroke end, the molten material may be charged into the flow channel 20 of the hot nozzle 19 and further into the cavity of the die M. Thus, the cavity may become completely filled.
(9) The die M is then cooled to solidify the molten material within the die M. Thereafter, the movable die half may be separated from the fixed die half, so that the solidified material can be taken out of the die M as a molded product. Further, while the die M is cooling, the hot nozzle 19, and in particular the front end portion; may be maintained at an appropriate temperature so as to keep the material within the die M in a semi-solid state. Therefore, the molded product can be easily removed from the die M. In addition, the temperature of the nozzle 19 can be adjusted so that the material only flows out of the nozzle 19 during a die charging operation. For example, the nozzle 19 may be maintained at a relatively high temperature during the die charging operation and a relatively low temperature at other times. Therefore, at times other than a die charging operation, the material within the nozzle 19 may re-solidify and thereby provide an airtight seal within the flow channel 20.

In this representative embodiment, the molten metal supply unit 1 includes the vacuum pump 17, which communicates with heating cylinder 11 and serves to reduce the pressure within the heating cylinder 11. Therefore, the semi-melted metal rods R can be heated substantially in the absence of air or oxygen. As a result, it is not necessary to use a special blast furnace with the present teachings. In addition, little or no heated gas vapor may be produced during the melting step. Further, the vacuum pump 17 may draw out any vapors that may be produced and these vapors can then be properly handled in order to limit or avoid environmental pollution. Furthermore, because the heating process within the cylinder 11 can be performed in a substantially vacuum condition, little or no air will be included within the molten materials. As a result, the molten metal supply unit 1 can be advantageously used as a material supply unit for the die M for molding products.

Further, because the interior of the cylinder 11 can be maintained in a substantially vacuum condition, the molten materials can be charged into the die M without including any air in the molten materials. Therefore, the quality and the yield of the molded products may be improved. Further, this aspect of the present teachings makes the present representative method particularly advantageous, even for materials that are not required to be melted under reduced pressure conditions in order to minimize pollutant gases. Therefore, this aspect of the present teachings can be effectively utilized with a wide variety of materials that will be melted from a solid state and discharged to another tool or machine for further manipulation of the liquid material.

In particular, because the vacuum pump 17 is connected to the ring 14 at the inlet of the heating cylinder 11, the outer periphery of the metal rod R may be absorbed toward the inner periphery of the ring 14 due to the reduced pressure. As a result, the reduced pressure also may serve to hold the metal rods R within the ring 14 and to hold the upstream side of the melting metal rods R within the heating cylinder 11.

In addition, the metal rods R may be sequentially pushed into the heating cylinder 11 by the hydraulic cylinder device 6 and the volume of the metal rod R may be determined to be equal to the volume of the cavity of the die M. Therefore, the molten materials may be supplied into the die M by an amount that is necessary for one product while the metal rod R is pushed into the heating cylinder 11 by a distance corresponding to the length of the metal rods. Therefore, the amount of the molten material supplied into the die M can be easily controlled.

Further, because the metal rods R may be preheated by the preheating unit 3 before they are supplied into the heating cylinder 11, the metal rods R may be easily quickly melted within the heating cylinder 11. In addition, because the metal rods R may be squeezed or scraped by the ring 14 at the inlet of the heating cylinder 11, no gaps exist between the ring 14 and the metal rods at the inlet of the heating cylinder 11. Therefore, air can be reliably prevented from entering the heating cylinder 11, so that the interior of the heating cylinder 11 can be reliably maintained in a substantially vacuum condition.

Furthermore, because the protective tube 13 can be inserted into the heating cylinder 11, the heating cylinder 11 preferably does not directly contact the molten materials. In particular, because the protective tube 13 may be made of materials, such as ceramic, that do not chemically react with the molten metals, such as aluminum alloy, the formation of metal by-products may be prevented. Therefore, the heating cylinder 11 may be protected from being damaged by the creation of such metal by-products. As a result, the heating cylinder 11 may have a long lifetime and may be made of materials, such as steel or iron, which are commonly and economically used for mechanical parts.

In addition, the inner wall of the flow channel 20 of the hot nozzle 19 also may be protected by a protective layer, which may serve as an insulating layer and also may serve to protect the hot nozzle 19 from the molten materials in the same manner as the protective tube 13. Therefore, the formation of metal by-products can be prevented throughout the flow path from the heating cylinder 11 to the cavity. As a result, the useable lifetime of the heating cylinder 11 and the hot nozzle 19 may be increased and the quality and yield of the molded products may be improved.

Preferably, the materials of the protective tube 13 and the inner layer of the flow channel 20 of the hot nozzle 19 may be selected to prevent the creation of metal by-products with the variety of alloys, which may include aluminum alloys and magnesium alloys, that are melted in heating cylinder 11. In particular, ceramics, ceramic-metal composites and chromium oxide coatings may provide a satisfactory result for this purpose.

In addition, the front end portion of the hot nozzle 19 may contact the fixed die half. In that case, the molten materials within the front end portion of the hot nozzle 19 may be cooled rapidly as the fixed die half is cooled in order to solidify the molten material within the cavity. Therefore, the remaining (solid or semi-solid) material within the hot nozzle 19 may serve to interrupt communication between the cavity and the heating cylinder 11. As a result, a valve means is not required to maintain the interior of the cylinder 11 in the substantially vacuum condition when the cavity has been opened in order to take the molded product out from the die M.

Further, the use of the hot nozzle 19 in association with the molten metal supply unit 1 may enable the production of molded products that do not have unnecessary appendages, such as runners, spools, biscuits and overflows, that typically accompany products that are molded using known die-casting apparatus. Because appendages are not formed, manufacturing costs of the molded products may be reduced and the molding cycle may be shortened. In addition, if it is not necessary to remove appendages from the molded products, manufacturing costs naturally will be further reduced. In general, the appendages that are removed from the molded products of known die-casting apparatus are usually melted again and are mixed with fresh metal materials so as to be used again (recycled) in the molding process. However, according to this representative embodiment, it is not necessary to melt such appendages, because such appendages are generally not produced in the first place. In addition, the molded products are stable in quality, because the molding process can be always performed using fresh materials.

Furthermore, according to this representative embodiment, the hydraulic cylinder device 106 of the preheating section 103 may also serve to charge the molten material into the cavity C of the die M through the hot nozzle 122. Thus, before the molding cycle is started, the preheated metal rods R are sequentially charged into the heating cylinder 111 by the piston 8 of the hydraulic cylinder device 106. At the same time, the heating cylinder 111 is heated, so that the heating cylinder 111 becomes filled with the molten material. Then, the molding cycle is started and the piston 8 of the hydraulic cylinder device 106 moves forward to push the rearmost preheated rod R into the heating cylinder 111 by a distance that corresponds to the volume of the cavity C. Consequently, the cavity C will be filled with the molten material.

Thus, in this representative embodiment, the rods R are completely melted within the heating cylinder 111. As a result, the heating cylinder 111 may have a length that is greater than the length of the heating cylinder 11 of the first representative embodiment so as to provide a relatively long heating area. In the alternative, additional heaters (not shown) may be mounted on or may be embedded within the heating cylinder 111, so as to increase the heating capability. The molten material is then cooled and taken out from the die M as an article of manufacture in the same manner as described in connection with the first representative embodiment. The molding cycle naturally can be repeated to sequentially mold a plurality of articles. Of course, during the molding cycle, the ring 14 preferably seals the inlet of the heating cylinder 111. Thus, the molten material within the heating cylinder 111 is prevented from being exposed to the outside environment, due to the reduced pressure generated by the vacuum pump 17.

In addition, although the metal rods R of the above representative embodiments have a circular sectional configuration, the metal rods R may have a variety of other cross-sectional configurations, such as polygon shapes, elliptical shapes, etc. Preferably, the ring 14 is formed to have an inner surface that substantially conforms to the configuration of the rods R and thus, the particular configuration of the ring 14 and the rods R is not important, as long as the configurations substantially correspond. Moreover, although the representative embodiments have been described in terms of metal rods R, such rods R may be any type of material that may be melted and then further processed or manipulated in a liquid state. For example, metal-plastic mixtures and other non-metal polymer compositions are also expressly contemplated by the present teachings.

Further, although the flow path 11 A and the outlet channel 21 of the heating cylinder 11 and the flow channel 20 of the hot nozzle 19 have circular cross sections in the above representative embodiment, the flow path 11A, the outlet channel 21 and the flow channel 20 may have any other configurations in cross section, e.g., rectangular or square configurations in cross section.

## Claims

1. A molten material supply unit (1) comprising:
a heating cylinder (11) constructed and arranged for receiving and heating the material in the form of rods (R) having a predetermined length;
a vacuum device (17) communicating with the heating cylinder (11) and being arranged and constructed to generate a reduced pressure within the heating cylinder (11); and
a squeezing member (14) disposed at an inlet of the heating cylinder (11), the squeezing member (14) having a diameter smaller than the diameter of the rods (R) so that an airtight seal is formed between the inner surface of the squeezing member (14) and the outer surface of a part of the rods (R).

2. A molten metal supply unit as in claim 1, wherein the vacuum device (17) comprises a vacuum pump that is disposed adjacent to the heating cylinder (11).

3. A molten material supply unit as in claim 1, wherein a protective tube (13) is inserted into the heating cylinder (11) so that the heating cylinder (11) does not directly contact the molten materials.

4. A molten material supply unit as in claim 1, further including a pusher device (6, 8) comprising a pushing piston (8) which can be moved between a resting position and a forward position to push the rods (R) into the heating cylinder (11).

5. A molten material supply unit as in claim 1, further including a preheating device (3) that is adapted to heat the rods (R) by means of heaters (9) so as to preheat and soften the rods (R) before the rods (R) are pushed by the pusher device (6, 8).

6. A molten material supply unit as in claim 1, wherein the heating cylinder (11) has an inner wall that is covered with a protective layer that does not chemically react with the melted material within the heating cylinder (11).

7. A molten material supply unit as in claim 6, wherein the protective layer is made of at least one material selected from the group consisting of ceramic, ceramic-metal composite and chromium oxide.

8. A molding apparatus for molding a material using a die, comprising a molten material supply unit (1) according to claim 1 and a die (M), wherein a front portion (11a) of the heating cylinder (11) communicates with a flow channel (20) defined within a hot nozzle (19) that is attached to the front portion (11a) of the heating cylinder (11) and wherein a front end of the flow channel (20) of the hot nozzle (19) directly opens into a cavity of the die (M).

9. A molding apparatus as in claim 8, wherein the molding apparatus comprises a material stacker (5) to receive material rods (R) having a predetermined length which can be supplied into the heating cylinder (11) via a supply cylinder (7)..

10. A molding apparatus as in claim 9, further including a pusher device (6, 8) for pushing the rods (R) into the heating cylinder (11).

11. A molding apparatus as in claim 10, further including a preheating device (3) which is arranged and constructed for preheating the rods (R) by means of heaters (9) to a predetermined temperature prior to the pushing device (6, 8) pushing the rods (R).

12. A molding apparatus as in claim 8, wherein the heating cylinder (11) has an inner wall that is covered with a protective layer that does not chemically react with the melted material disposed within the heating cylinder.

13. A molding apparatus as in claim 12, wherein the pushing device (6, 8) comprises a piston (8) and wherein the piston (8), in operation, contacts a rear end of each rod (R) and moves each rod (R) by a predetermined stroke in order to push the rods (R) into the heating cylinder (11), the predetermined stroke being determined in response to the volume of a cavity defined within the die (M).

14. A molding apparatus as in claim 13, further including a stacker (5) that stores a plurality of rods (R) and supplies the rods (R) one after another to the pushing device (6, 8), wherein the pushing device (6, 8), in operation, sequentially pushes the rods (R) into the heating cylinder (11).

15. A molding apparatus as in claim 14, wherein the stacker (5) includes a heater (9) by means of which the rods (R) can be preheated before the rods (R) are supplied to the pusher device (6, 8).

16. A molding apparatus according to claim 8, wherein
the heating cylinder (11) has an inlet to receive a metal material and comprises heaters (12) to heat the material until the material is heated to a melted state or a semi-melted state;
a ring is disposed as squeezing member (14) at the inlet of the heating cylinder (11) and includes a squeezing portion for squeezing or scraping an outer surface of the material that enters the heating cylinder (11);
a nozzle (19) is attached to a front end (11 a) of the heating cylinder (11), wherein, in operation, melted metal is injected into the die (M) through the nozzle (19);
the vacuum device (17) is operable to bring an inner space (11A) of the heating cylinder (11) into a substantially vacuum condition; and
a pressing device (6, 8) is provided including a cylinder (6) and a piston (8) which pressing device (6, 8), in operation, supplies the metal material into the heating cylinder (11) and feeds the material in the melted state or the semi-melted state under pressure to the nozzle (19), so that the material can be injected into the mold (M) via the nozzle (19).

17. A molding apparatus as in claim 16, wherein the heating cylinder (11) defines a flow path (11A) for the melted or semi-melted metal material, an outlet channel (21) is defined within a front portion (11a) of the heating cylinder (11) and communicates with the flow path (11A), a nozzle (19) defines a flow channel (20) that has a diameter smaller than the diameter of the flow path (11A), the outlet channel (21) opens into the flow channel (20) and is tapered toward the flow channel (20), and the outlet channel (21) has an upper edge that extends at a level that is equal to or lower than the level of an upper edge of the flow channel (20) of the nozzle (19).

## Patentansprüche

1. Zuführeinheit (1) für geschmolzenes Material, umfassend:
einen Heizzylinder (11), der dazu eingerichtet und vorgesehen ist, das Material in Form von Stäben (R), die eine vorbestimmte Länge aufweisen, aufzunehmen und zu heizen;
eine Vakuumvorrichtung (17), die mit dem Heizzylinder (11) in Verbindung steht und dazu eingerichtet und vorgesehen ist, einen reduzierten Druck innerhalb des Heizzylinders (11) herzustellen; und
ein Quetschelement (14), das an einem Einlass des Heizzylinders (11) angeordnet ist, wobei das Quetschelement (14) einen Durchmesser aufweist, der kleiner als der Durchmesser der Stäbe (R) ist, so dass zwischen der inneren Oberfläche des Quetschelements (14) und der äußeren Oberfläche eines Teils der Stäbe (R) eine luftdichte Dichtung gebildet ist.

2. Zuführeinheit für geschmolzenes Metall wie in Anspruch 1, wobei die Vakuumvorrichtung (17) eine Vakuumpumpe umfasst, die benachbart zum Heizzylinder (11) angeordnet ist.

3. Zuführeinheit für geschmolzenes Material wie in Anspruch 1, wobei ein Schutzrohr (13) in den Heizzylinder (11) eingeführt ist, so dass der Heizzylinder (11) die geschmolzenen Materialien nicht direkt berührt.

4. Zuführeinheit für geschmolzenes Material wie in Anspruch 1, die ferner eine Vordrückvorrichtung (6, 8) enthält, welche einen Druckkolben (8) umfasst, der zwischen einer Ruheposition und einer Vorwärtsposition bewegt werden kann, um die Stäbe (R) in den Heizzylinder (11) zu drücken.

5. Zuführeinheit für geschmolzenes Material wie in Anspruch 1, die ferner eine Vorheizvorrichtung (3) enthält, die zum Heizen der Stäbe (R) mittels Heizgeräten (9) angepasst ist, um so die Stäbe (R) vorzuheizen und zu erweichen, bevor die Stäbe (R) durch die Vordrückvorrichtung (6, 8) gedrückt werden.

6. Zuführeinheit für geschmolzenes Material wie in Anspruch 1, wobei der Heizzylinder (11) eine innere Wand aufweist, die mit einer Schutzschicht beschichtet ist, welche chemisch nicht mit dem geschmolzenen Material innerhalb des Heizzylinders (11) reagiert.

7. Zuführeinheit für geschmolzenes Material wie in Anspruch 6, wobei die Schutzschicht aus mindestens einem Material hergestellt ist, das ausgewählt ist aus der Gruppe bestehend aus Keramik, Keramik-Metall-Verbundwerkstoff und Chromoxid.

8. Formgebungsgerät zum Formen eines Materials unter Verwendung einer Pressform, das eine Zuführeinheit (1) für geschmolzenes Material gemäß Anspruch 1 und eine Pressform (M) umfasst, wobei ein vorderer Abschnitt (11a) des Heizzylinders (11) mit einem Flusskanal (20) in Verbindung steht, welcher innerhalb einer Heißdüse (19) definiert ist, die an den vorderen Abschnitt (11a) des Heizzylinders (11) angebracht ist und wobei ein vorderes Ende des Fließkanals (20) der Heißdüse (19) sich direkt in einen Hohlraum der Pressform (M) öffnet.

9. Formgebungsgerät wie in Anspruch 8, wobei das Formgebungsgerät eine Materialstapelvorrichtung (5) umfasst, die Materialstäbe (R) aufnimmt, die eine vorbestimmte Länge aufweisen und in den Heizzylinder (11) mittels eines Zuführzylinders (7) zugeführt werden können.

10. Formgebungsgerät wie in Anspruch 9, das ferner eine Vordrückvorrichtung (6, 8) enthält, um die Stäbe (R) in den Heizzylinder (11) zu drücken.

11. Schmelzapparat wie in Anspruch 10, der ferner eine Vorheizvorrichtung (3) enthält, die zum Heizen der Stäbe (R) mittels Heizgeräten (9) auf eine vorbestimmte Temperatur, bevor die Vordrückvorrichtung (6, 8) die Stäbe (R) drückt, vorgesehen und eingerichtet ist.

12. Formgebungsgerät wie in Anspruch 8, wobei der Heizzylinder (11) eine innere Wand aufweist, die mit einer Schutzschicht beschichtet ist, die chemisch nicht mit dem geschmolzenen Material reagiert, welches innerhalb des Heizzylinders angeordnet ist.

13. Formgebungsgerät wie in Anspruch 12, wobei die Vordrückvorrichtung (6, 8) einen Kolben (8) umfasst und wobei der Kolben (8) im Betrieb ein hinteres Ende eines jeden Stabes (R) berührt und jeden Stab (R) durch einen vorbestimmten Hub bewegt, um die Stäbe (R) in den Heizzylinder (11) zu drücken, wobei der vorbestimmte Hub in Antwort zu dem Volumen eines Hohlraums, der innerhalb der Pressform (M) definiert ist, bestimmt wird.

14. Formgebungsgerät wie in Anspruch 13, das ferner eine Stapelvorrichtung (5) enthält, die eine Vielzahl von Stäben (R) lagert und die Stäbe (R) einen nach dem anderen zu der Vordrückvorrichtung (6, 8) zuführt, wobei die Vordrückvorrichtung (6, 8) im Betrieb die Stäbe (R) der Reihe nach in den Heizzylinder (11) drückt.

15. Formgebungsgerät wie in Anspruch 14, wobei die Stapelvorrichtung (5) ein Heizgerät (9) enthält, mittels dessen die Stäbe (R) vorgeheizt werden können, bevor die Stäbe (R) der Vordrückvorrichtung (6, 8) zugeführt werden.

16. Formgebungsgerät gemäß Anspruch 8, wobei
der Heizzylinder (11) einen Einlass aufweist, um ein Metallmaterial aufzunehmen und Heizgeräte (12) umfasst, um das Material zu heizen, bis das Material zu einem geschmolzenen Zustand oder einem halbgeschmolzenen Zustand erhitzt ist;
ein Ring als Quetschelement (14) am Einlass des Heizzylinders (11) angeordnet ist und einen Quetschabschnitt zum Quetschen oder Kratzen einer äußeren Oberfläche des Materials, welches in den Heizzylinder (11) eintritt, enthält;
eine Düse (19) an einem vorderen Ende (11a) des Heizzylinders (11) angebracht ist, wobei im Betrieb geschmolzenes Metall in die Pressform (M) durch die Düse (19) injiziert wird;
die Vakuumvorrichtung (17) bedienbar ist, um einen inneren Raum (11A) des Heizzylinders (11) in einen im Wesentlichen Vakuumzustand zu bringen; und
eine Anpressvorrichtung (6, 8) vorgesehen ist, die einen Zylinder (6) und einen Kolben (8) enthält und im Betrieb das Metallmaterial in den Heizzylinder (11) zuführt und das Material im geschmolzenen Zustand oder im halbgeschmolzenen Zustand unter Druck zu der Düse (19) speist, so dass das Material in die Form (M) mittels der Düse (19) injiziert werden kann.

17. Formgebungsgerät wie in Anspruch 16, wobei der Heizzylinder (11) einen Fließpfad (11A) für das geschmolzene oder halbgeschmolzene Metallmaterial definiert, wobei ein Auslasskanal (21) innerhalb eines vorderen Abschnitts (11a) des Heizzylinders (11) definiert ist und mit dem Fließpfad (11A) in Verbindung steht, wobei eine Düse (19) einen Fließkanal (20) definiert, der einen Durchmesser aufweist, der kleiner ist als der Durchmesser des Fließpfades (11A), wobei der Auslasskanal (21) sich in den Fließkanal (20) öffnet und sich zum Fließkanal (20) verjüngt, und wobei der Auslasskanal (21) eine obere Kante aufweist, die sich in einem Niveau erstreckt, das gleich zu oder kleiner als das Niveau einer oberen Kante des Fließkanals (20) der Düse (19) ist.

## Revendications

1. Unité d'alimentation de matériau fondu (1) comprenant :
un cylindre chauffant (11) construit et disposé de façon à recevoir et à chauffer le matériau sous la forme de tiges (R) ayant une longueur prédéterminée ;
un dispositif de vide (17) communiquant avec le cylindre chauffant (11) et disposé et construit de façon à générer une pression réduite dans le cylindre chauffant (11) ; et
un élément de compression (14) disposé à une entrée du cylindre chauffant (11), l'élément de compression (14) ayant un diamètre inférieur au diamètre des tiges (R),
de sorte qu'un joint étanche à l'air soit formé entre la surface intérieure de l'élément de compression (14) et la surface extérieure d'une partie des tiges (R).

2. Unité d'alimentation de métal fondu selon la revendication 1, dans laquelle le dispositif de vide (17) comprend une pompe à vide qui est disposée de manière adjacente au cylindre chauffant (11).

3. Unité d'alimentation de matériau fondu selon la revendication 1, dans laquelle une tube protecteur (13) est inséré dans le cylindre chauffant (11), de sorte que le cylindre chauffant (11) n'entre pas directement en contact avec les matériaux fondus.

4. Unité d'alimentation de matériau fondu selon la revendication 1, comprenant en outre un dispositif pousseur (6, 8) comprenant un piston de poussée (8) qui peut être déplacé entre une position de repos et une position vers l'avant pour pousser les tiges (R) dans le cylindre chauffant (11).

5. Unité d'alimentation de matériau fondu selon la revendication 1, comprenant en outre un dispositif de préchauffage (3) qui est adapté pour chauffer les tiges (R) au moyen de systèmes de chauffage (9), de façon à préchauffer et à ramollir les tiges (R) avant que lesdites tiges (R) ne soient poussées par le dispositif pousseur (6, 8).

6. Unité d'alimentation de matériau fondu selon la revendication 1, dans laquelle le cylindre chauffant (11) a une paroi interne qui est recouverte d'une couche de protection qui ne réagit pas chimiquement avec le matériau fondu dans le cylindre chauffant (11).

7. Unité d'alimentation de matériau fondu selon la revendication 6, dans laquelle la couche de protection est faite d'au moins un matériau choisi dans le groupe constitué de céramique, de composite céramique-métal et d'oxyde de chrome.

8. Appareil de moulage pour mouler un matériau en utilisant une matrice, comprenant une unité d'alimentation de matériau fondu (1) selon la revendication 1, et une matrice (M), dans lequel une partie frontale (11a) du cylindre chauffant (11) communique avec un canal d'écoulement (20) défini dans une buse chaude (19), qui est fixée à la partie frontale (11a) du cylindre chauffant (11) et dans lequel une extrémité avant du canal d'écoulement (20) de la buse chaude (19) s'ouvre directement dans une cavité de la matrice (M).

9. Appareil de moulage selon la revendication 8, dans lequel l'appareil de moulage comprend un empileur de matériau (5) qui reçoit les tiges de matériau (R) ayant une longueur prédéterminée, qui peuvent être amenées au cylindre chauffant (11) par un cylindre d'alimentation (7).

10. Appareil de moulage selon la revendication 9, comprenant en outre un dispositif pousseur (6, 8) pour pousser les tiges (R) dans le cylindre chauffant (11).

11. Appareil de moulage selon la revendication 10, comprenant en outre un dispositif de préchauffage (3) qui est disposé et construit de façon à préchauffer les tiges (R), au moyen de systèmes de chauffage (9) à une température prédéterminée avant que le dispositif pousseur (6, 8) ne pousse les tiges (R).

12. Appareil de moulage selon la revendication 8, dans lequel le cylindre chauffant (11) a une paroi interne qui est recouverte d'une couche de protection qui ne réagit pas chimiquement avec le matériau fondu disposé dans le cylindre chauffant.

13. Appareil de moulage selon la revendication 12, dans lequel le dispositif pousseur (6, 8) comprend un piston (8) et dans lequel le piston (8), en fonctionnement, entre en contact avec une extrémité arrière de chaque tige (R) et déplace chaque tige (R) sur une course prédéterminée, afin de pousser les tiges (R) dans le cylindre chauffant (11), la course prédéterminée étant déterminée en réponse au volume d'une cavité définie dans la matrice (M).

14. Appareil de moulage selon la revendication 13, comprenant en outre un empileur (5) qui stocke une pluralité de tiges (R) et fournit les tiges (R) l'une après l'autre au dispositif pousseur (6, 8), dans lequel le dispositif pousseur (6, 8) en fonctionnement, pousse séquentiellement les tiges (R) dans le cylindre chauffant (11).

15. Appareil de moulage selon la revendication 14, dans lequel l'empileur (5) comprend un système de chauffage (9), par le biais duquel les tiges (R) peuvent être préchauffées avant que lesdites tiges (R) ne soient amenées au dispositif pousseur (6, 8).

16. Appareil de moulage selon la revendication 8, dans lequel
le cylindre chauffant (11) a une entrée pour recevoir un matériau métallique et comprend des systèmes de chauffage (12) pour chauffer le matériau jusqu'à ce qu'il soit chauffé à l'état fondu ou à l'état semi-fondu ;
une bague est disposée comme élément de compression (14) à l'entrée du cylindre chauffant (11) et comprend une partie de compression pour comprimer ou rayer une surface extérieure du matériau qui entre dans le cylindre de chauffage (11) ;
une buse (19) est fixée à une extrémité avant (11a) du cylindre chauffant (11), dans lequel, en fonctionnement, le métal fondu est injecté dans la matrice (M) à travers la buse (19);
le dispositif de vide (17) peut fonctionner pour mettre un espace interne (1 lA) du cylindre chauffant (11) dans une condition sensiblement de vide ; et
un dispositif de compression (6, 8) est fourni, comprenant un cylindre (6) et un piston (8), ledit dispositif de compression (6, 8) en fonctionnement, fournit le matériau métallique dans le cylindre chauffant (11) et alimente le matériau à l'état fondu ou à l'état semi-fondu sous pression à la buse (19), de sorte que le matériau puisse être injecté dans le moule (M) via la buse (19).

17. Appareil de moulage selon la revendication 16, dans lequel le cylindre chauffant (11) définit un chemin d'écoulement (11 A) pour le matériau métallique fondu ou semi-fondu, un canal de sortie (21) est défini dans une partie frontale (11a) du cylindre chauffant (11) et communique avec le chemin d'écoulement (11A), une buse (19) définit un canal d'écoulement (20) qui a un diamètre inférieur au diamètre du chemin d'écoulement (11A), le canal de sortie (21) s'ouvre dans le canal d'écoulement (20) et est effilé vers le canal d'écoulement (20) et le canal d'écoulement (21) a un bord supérieur qui s'étend à un niveau qui est égal ou inférieur au niveau d'un bord supérieur du canal d'écoulement (20) de la buse (19).
